# EUROPÄISCHE PATENTSCHRIFT

(11) **EP 3 463 825 B1**
(45) Veröffentlichungstag und Bekanntmachung des Hinweises auf die Patenterteilung: **24.06.2020**
(21) Anmeldenummer: 17730066.2
(22) Anmeldetag: 23.05.2017
(51) Int. Cl.: B29C 70/08, B29B 11/16, B29C 70/34

(54) **VERFAHREN ZUM HERSTELLEN EINES BAUTEILS AUS EINEM FASERVERBUNDWERKSTOFF**
METHOD FOR PRODUCING A COMPONENT FROM A FIBRE-COMPOSITE MATERIAL
PROCÉDÉ POUR LA FABRICATION D'UN ÉLÉMENT EN MATÉRIAU COMPOSITE À BASE DE FIBRES

(30) Priorität: 25.05.2016 DE 102016109728
(43) Veröffentlichungstag der Anmeldung: 10.04.2019
(73) Patentinhaber: BOGE Elastmetall GmbH, 49401 Damme (DE)
(72) Erfinder: HÄFFELIN, Daniel, 49078 Osnabrück (DE); BEUTLER, Olaf, 49356 Diepholz (DE); TIEMANN, Burkhard, 49152 Bad Essen (DE); KAMOTZKE, Felix, 49078 Osnabrück (DE)
(74) Vertreter: Bossmeyer, Jörg Peter
(86) Internationale Anmeldenummer: PCT/EP2017/062488
(87) Internationale Veröffentlichungsnummer: WO 2017/202883

(56) Entgegenhaltungen:
- EP-A2- 0 421 767
- US-A- 3 926 708

## Beschreibung

Die Erfindung betrifft ein Verfahren zum Herstellen eines Bauteils aus einem Faserverbu ndwerkstoff.

Die DE 102 53 300 A1 offenbart ein Verfahren zur Herstellung von Strukturbauteilen mit einem Kunststoff-Matrixmaterial, welches durch Glasfasern verstärkt wird, wobei gezielt ausgerichtete Kohlenstofffasern entsprechend von Lastpfaden des Bauteils im belasteten Zustand mindestens bereichsweise vorgesehen werden. Insbesondere werden die ausgerichteten Kohlenstofffasern zwischen zwei Schichten von im Wesentlichen willkürlich ausgerichteten Glasfaserstrukturen eingebettet.

Aus der EP 0 491 353 A1 ist ein Verfahren bekannt, wonach ein Aufbringen lastpfadorientierter Faseranteile durch ein lokales Anpressen mit einer Anpressrolle bei lokaler Erhitzung des Faserbandes ausgeführt wird. Nachteilig an diesem Verfahren ist, dass es nicht möglich ist, mehrere Faserorientierungen gleichzeitig abzulegen. Zusätzlich schränkt dieses Verfahren die geometrische Komplexität von Bauteilen ein.

Die DE 10 2006 025 280 A1 offenbart ein Verfahren zur Herstellung eines faserverstärkten Bauteils, wobei ein Bündel einer Endlosfaser imprägniert und dieser Faser/Matrix-Strang mittels eines Handhabungsgerätes über eine Düse endkonturnah in eine temperierte Vorrichtung gelegt und anschließend konsolidiert wird. Insbesondere wird bereichsweise der Faser/Matrix-Strang mit der Endlosfaser und in anderen Bereichen ein Faser/Matrix-Strang mit Lang- oder Kurzfasern in die Form gelegt.

EP 0 421 767 offenbart ein Verfahren zum Herstellen eines Bauteils aus einem Faserverbundwerkstoff, wobei
a) mehrere Faserbandstücke, die jeweils eine thermoplastische Faserbandstückmatrix mit darin eingebetteten Faserbandstückfasern umfassen, bereitgestellt werden,
b) die Faserbandstücke im festen Zustand aufgenommen und zu einem Faserbandmuster angeordnet werden,
c) eine Trägerschicht, die eine thermoplastische Trägerschichtmatrix mit darin eingebetteten Trägerschichtfasern umfasst, bereitgestellt und derart erhitzt wird, dass die Trägerschichtmatrix erweicht oder schmilzt,
d) aus der Trägerschicht und dem Faserbandmuster ein Vorformling gebildet wird, und
e) der im umformbaren Zustand vorliegende Vorformling umgeformt wird.

Faserverbundwerkstoffe werden durch arbeits- und kostenintensive Verfahren hergestellt, wobei der Faserverbundwerkstoff aus einem Anteil Fasern und einem Anteil Matrix besteht. Bei der Verarbeitung endlosfaserverstärkter Thermoplaste ist es dabei üblich, ebene Zwischenprodukte umzuformen, die bereits einen ausreichenden Anteil thermoplastischer Matrix im Fasermaterial enthalten. Dieser Zuschnitt wird insbesondere als Platine bezeichnet, wobei das Ausgangsmaterial der Platine vorzugsweise ein Organoblech ist. Beispielsweise erfolgt das Herstellen eines Organoblechs u.a. durch das Aufschichten ebener Faserhalbzeuge, die unter Druck und Temperatur mit thermoplastischen Materialien in Folien- und/oder Pulverform verpresst werden.

Als Matrixmaterial des Organoblechs können insbesondere alle Formen thermoplastischer Materialien eingesetzt werden. Typische Vertreter sind Polyamide, Polypropylene, Polyethylenterephthalate, Polyetheretherketone Polyphthalamide sowie thermoplastische Polyurethane.

Als Vorformling, der vorzugsweise das Fasermaterial und ein thermoplastisches Matrixmaterial umfasst, wird insbesondere ein Zwischenprodukt bezeichnet, das die Be- oder Verarbeitungszustände eines Faserhalbzeugs ab Zusammenkunft aller Endlosfaseranteile sowie deren Matrixanteile durchläuft. Bevorzugt durchläuft ein Vorformling die Be- oder Verarbeitungszustände am Endlosfaseranteil bis zu dessen Umformung.

Zur wirtschaftlichen Fertigung des Ausgangsmaterials der Platinen ist es üblich, in einem ersten Schritt ein großflächiges Fasermaterial als Plattenware herzustellen, aus dem anschließend die Platine herausgetrennt wird. Im Rahmen des Herstellungsschritts dieser Plattenware ist eine Zugspannung auf dem Fasermaterial zur Prozesskontrolle notwendig und erfordert eine durchgehende Faser über der Breite der Plattenware. Damit wird die Platine auf eine Faserarchitektur begrenzt, die über die gesamte Fläche konstant ist.

Fasern weisen in Ihrer Längsrichtung gesteigerte mechanische Eigenschaften auf. Daher wird bei der mechanischen Auslegung des Fasermaterials im Bauteil die Orientierung des Endlosfasermaterials auf und längs der Lastpfade des Produkts orientiert. Bauteile können Bereiche höherer Belastung aufweisen, gegen welche die Wandstärke, der Faseraufbau und der Verlauf ausgelegt werden. Somit ergeben sich in umgebenden Bereichen der Spannungsspitze überdimensionierte Wandstärken im Endlosfasermaterial, die aufgrund der Herstellungsweise der Platine nicht eingespart werden können. Die Kostenstruktur von Produkten dieser Werkstoffklasse legt jedoch einen sparsamen Einsatz des Grundmaterials (Organoblech) nahe. Die Folge ist somit ein Zielkonflikt aus Wirtschaftlichkeit und mechanischen Eigenschaften des Endlosfasermaterials.

Es sind Verfahren bekannt, die ein direktes Legen des endlosen Fasermaterials auf ebene oder dreidimensionale Trägerschichten vorsehen, die anschließend derart umgeformt werden, dass das Fasermaterial im Lastpfad liegt. Diese Verfahren können unterschieden werden in Verfahren zur Verarbeitung unkonsolidierter (trockener) Fasern und konsolidierter (mit Matrix versehender) Fasern. Verfahren des trockenen Legens (z.B. TFP: Tailored Fiber Placement) sticken Verstärkungsfasern mit einem Nähfaden auf ein Trägermaterial und werden im Laufe der weiteren Verarbeitung mit einem chemisch/thermisch härtenden Kunststoff getränkt und zu einem Bauteil fixiert. Zur Tränkung aufzuwendende Prozessparameter wie Druck und Temperatur führen allerdings zu einem Anstieg des Anlagenaufwands.

Verfahren zur lastpfadorientierten Verarbeitung thermoplastisch konsolidierter Halbzeuge basieren entweder auf einer direkten stoffschlüssigen Anbindung der Verstärkungsfasern mit einer Ablage oder auf einer vorläufigen Faserfixierung mit anschließender Konsolidierung in einem nachgeschalteten Prozessschritt. Dabei können u.a. dünne Bänder auf abzufahrenden Bahnen der Bauteilgeometrie abgelegt werden. Bei dieser Verfahrensart wird die geometrische Komplexität durch die ablegbaren Radien endloser Fasern und die Dimension der Ablegeeinrichtungen begrenzt.

Werden hingegen Faserbänder aus Endlosfaserverstärkung in Bahnen auf dreidimensionalen Geometrien über die Länge eines Bauteiles abgelegt, führen Längenunterschiede zwischen Kurveninnenseite und Kurvenaußenseite zur Begrenzung fehlerfrei ablegbarer Radien und folglich zur Begrenzung geometrischer Bauteilkomplexität.

Das Aufbringen von Verstärkungsfasern zur Steigerung der Anisotropie von Endlosfaserprodukten ist somit bekannt. Nachteilig an den bekannten Verfahren ist insbesondere, dass entweder ein Zwischenprodukt vor dem Aufheizen erstellt wird, was zu wenigstens einem zusätzlichen Prozessschritt und zur Minderung der Materialeigenschaften führt oder dass die verstärkenden Faseranteile nacheinander auf das Trägermaterial zu einem Muster abgelegt werden, was ebenfalls einen zusätzlichen Prozessschritt erfordert und die Geschwindigkeit der Fertigungslinie reduziert. Weiterhin ist die Verwendung von Schmelzklebern bekannt, was allerdings zu einer stoffinhomogenen Fasermatrix führt.

Ausgehend hiervon liegt der Erfindung die Aufgabe zugrunde, ein einfacheres Verfahren zum Herstellen eines Bauteils aus einem Faserverbundwerkstoff zu schaffen.

Diese Aufgabe wird erfindungsgemäß durch ein Verfahren nach Anspruch 1 gelöst. Bevorzugte Weiterbildungen der Erfindung sind in den Unteransprüchen und in der nachfolgenden Beschreibung gegeben.

Erfindungsgemäß wird ein Verfahren zum Herstellen eines Bauteils aus einem Faserverbundwerkstoff geschaffen, wobei
a) mehrere Faserbandstücke, die jeweils eine thermoplastische Faserbandstückmatrix mit darin eingebetteten Faserbandstückfasern umfassen, bereitgestellt werden,
b) die Faserbandstücke im festen und/oder starren Zustand, beispielsweise bei Raumtemperatur, aufgenommen und zu einem Faserbandmuster angeordnet werden,
c) eine Trägerschicht, die eine thermoplastische Trägerschichtmatrix mit darin eingebetteten Trägerschichtfasern umfasst, bereitgestellt und derart erhitzt wird, dass die Trägerschichtmatrix erweicht und/oder schmilzt,
d) aus der Trägerschicht und dem Faserbandmuster ein Vorformling gebildet wird, indem das Faserbandmuster im festen und/oder starren Zustand, insbesondere direkt, auf die erhitzte Trägerschicht aufgebracht und durch diese, insbesondere durch Kontaktwärme, derart erwärmt wird, dass die Faserbandstückmatrizes erweichen und/oder schmelzen, sodass der Vorformling in einem umformbaren Zustand vorliegt, in dem sowohl die Trägerschichtmatrix als auch die Faserbandstückmatrizes erweicht und/oder geschmolzen sind, und
e) der im umformbaren Zustand vorliegende Vorformling, insbesondere unter Ausbildung des oder eines Bauteils, umgeformt wird.

Bei dem erfindungsgemäßen Verfahren werden die Faserbandstücke im festen und/oder starren Zustand zu dem Faserbandmuster angeordnet, welches im festen und/oder starren Zustand, insbesondere als Ganzes, zum Bilden des Vorformlings auf die erhitzte Trägerschicht aufgebracht wird. Die Faserbandstücke verbleiben daher bis zum Kontakt mit der Trägerschicht fest und/oder starr und sind somit vereinfacht handhabbar. Dadurch ist auch die Verwendung besonders dünner Faserbandstücke möglich. Da die Faserbandstücke und/oder die Faserbandmatrizes erst durch den Kontakt mit der und/oder durch das Aufbringen auf die Trägerschicht erweichen und/oder schmelzen, ist insbesondere eine Entkopplung der Prozessparameter Zeit und Temperatur erzielbar, sodass einmal aufgenommene Faserbandstücke trotz auftretender Störungen und/oder Pausen anschließend im Prozess weiterverarbeitet werden können. Das erfindungsgemäße Verfahren eignet sich somit in besondere Weise zur Automatisierung.

Bevorzugt werden die Faserbandstücke, insbesondere im Schritt a), im festen und/oder starren Zustand bereitgestellt, beispielsweise bei Raumtemperatur. Vorzugsweise sind die Faserbandstücke frei von einem Binder oder Schmelzkleber.

Gemäß einer Weiterbildung werden die Faserbandstücke, insbesondere vor ihrem Bereitstellen und/oder zu ihrem Bereitstellen und/oder vor Schritt a) und/oder im Schritt a), von einem oder wenigstens einem Faserband abgetrennt und/oder abgeschnitten. Bevorzugt sind und/oder bilden die Faserbandstücke Stücke des oder des wenigstens einen oder eines oder wenigstens eines Faserbands. Insbesondere umfasst das oder das wenigstens eine Faserband eine thermoplastische Faserbandmatrix mit darin eingebetteten Faserbandfasern. Das Abtrennen und/oder Abschneiden der Faserbandstücke von dem oder dem wenigstens einen Faserband erfolgt bevorzugt im festen und/oder starren Zustand des oder des wenigstens einen Faserbands, beispielsweise bei Raumtemperatur. Insbesondere erfolgt das Abtrennen und/oder Abschneiden der Faserbandstücke mittels einer Schneideinrichtung, welche bevorzugt die Faserbandstücke zur Verfügung stellt. Der Schneideinrichtung wird vorzugsweise das oder das wenigstens eine Faserband oder werden bevorzugt mehrere Faserbänder zugeführt.

Die Faserbandstückmatrizes der Faserbandstücke bestehen bevorzugt aus demselben oder dem gleichen Material. Vorzugsweise ist und/oder bildet die Faserbandstückmatrix jedes Faserbandstücks ein Stück der Faserbandmatrix des oder des wenigstens einen Faserbands. Insbesondere bestehen die Faserbandstückmatrizes der Faserbandstücke aus dem Material der Faserbandmatrix.

Die Faserbandstückfasern der Faserbandstücke bestehen bevorzugt aus demselben oder dem gleichen Material. Vorzugsweise sind und/oder bilden die Faserbandstückfasern jedes Faserbandstücks Stücke der Faserbandfasern des oder des wenigstens einen Faserbands. Insbesondere bestehen die Faserbandstückfasern der Faserbandstücke aus dem Material der Faserbandfasern.

Gemäß einer vorteilhaften Ausgestaltung werden die Faserbandstücke, insbesondere im Schritt b), Lastpfaden des oder eines herzustellenden Bauteils zugeordnet und entsprechend den Lastpfaden zu dem Faserbandmuster angeordnet. Bevorzugt wird, insbesondere im Schritt c), die Trägerschicht auf eine Temperatur erhitzt, die über der Schmelztemperatur der Trägerschichtmatrix und über der Schmelztemperatur jeder Faserbandstückmatrix liegt. Vorzugsweise wird, insbesondere im Schritt d), das Faserbandmuster als Ganzes auf die Trägerschicht aufgebracht. Vorteilhaft weist, insbesondere im Schritt d) und/oder im Schritt e), der im umformbaren Zustand vorliegende Vorformling eine Temperatur oder Mischungstemperatur auf, die über der Schmelztemperatur der Trägerschichtmatrix und über der Schmelztemperatur jeder Faserbandstückmatrix liegt. Vorteilhaft werden, insbesondere im Schritt e), sowohl die Trägerschicht als auch das Faserbandmuster und/oder die Faserbandstücke umgeformt.

Bevorzugt ist jedes Faserbandstück, insbesondere im Schritt a) und/oder im Schritt b) und/oder im Schritt d) und/oder während des Aufbringens des Faserbandmusters auf die Trägerschicht und/oder vor dem Umformen, eben oder überwiegend eben. Vorteilhaft ist das Faserbandmuster, insbesondere im Schritt b) und/oder im Schritt d) und/oder während des Aufbringens des Faserbandmusters auf die Trägerschicht und/oder vor dem Umformen, eben oder überwiegend eben. Vorzugsweise ist die Trägerschicht, insbesondere im Schritt c) und/oder im Schritt d) und/oder während des Aufbringens des Faserbandmusters auf die Trägerschicht und/oder vor dem Umformen, eben oder überwiegend eben. Hierdurch lässt sich insbesondere das Bilden des Vorformlings vereinfachen, da keine komplizierten Geometrien auftreten. Bevorzugt ist der Vorformling, insbesondere im Schritt d) und/oder vor dem Schritt e) und/oder vor dem Umformen, eben oder überwiegend eben.

Gemäß einer Ausgestaltung weisen die Faserbandstücke des Faserbandmusters, insbesondere im Schritt b) und/oder in Schritt d) und/oder während des Aufbringens des Faserbandmusters auf die Trägerschicht und/oder vor dem Umformen und/oder während des Umformens und/oder nach dem Umformen, eine unterschiedliche Position und/oder eine unterschiedliche Orientierung auf. Somit lassen sich die Faserbandstücke insbesondere unterschiedlichen Lastpfaden des herzustellenden Bauteils zuordnen.

Gemäß einer Weiterbildung weisen die Faserbandstücke unterschiedliche Längen auf. Somit lassen sich mit den Faserbandstücken insbesondere unterschiedliche Lastpfadlängen des herzustellenden Bauteils berücksichtigen. Vorzugsweise werden die Faserbandstücke in unterschiedlichen Längen von der Schneideinrichtung zur Verfügung gestellt.

Bevorzugt sind und/oder umfassen die Trägerschichtfasern Endlosfasern und/oder die Trägerschichtfasern liegen in Form von Endlosfasern vor. Insbesondere sind und/oder umfassen die Trägerschichtfasern Kohlenstoffasern und/oder Glasfasern und/oder Aramidfasern und/oder Naturfasern. Vorzugsweise sind und/oder umfassen die Faserbandstückfasern Endlosfasern und/oder Stücke von Endlosfasern und/oder die Faserbandstückfasern liegen in Form von Endlosfasern und/oder in Form von Stücken von Endlosfasern vor. Insbesondere sind und/oder umfassen die Faserbandstückfasern Kohlenstoffasern und/oder Glasfasern und/oder Aramidfasern und/oder Naturfasern. Vorteilhaft sind und/oder umfassen die Faserbandfasern Endlosfasern und/oder die Faserbandfasern liegen in Form von Endlosfasern vor. Insbesondere sind und/oder umfassen die Faserbandfasern Kohlenstoffasern und/oder Glasfasern und/oder Aramidfasern und/oder Naturfasern.

Gemäß einer Ausgestaltung gehören die Trägerschichtmatrix und jede Faserbandstückmatrix der gleichen thermoplastischen Stoffgruppe an. Insbesondere weist die Schmelztemperatur der Trägerschichtmatrix zu der Schmelztemperatur jeder Faserbandstückmatrix eine Abweichung von weniger als 30 Kelvin auf. Somit ist es insbesondere einfacher, ein Schmelzen der Faserbandstückmatrizes durch die erhitzte Trägerschichtmatrix zu erzielen.

Bevorzugt gehören die Trägerschichtmatrix und die Faserbandmatrix der gleichen thermoplastischen Stoffgruppe an. Insbesondere weist die Schmelztemperatur der Trägerschichtmatrix zu der Schmelztemperatur der Faserbandmatrix eine Abweichung von weniger als 30 Kelvin auf.

Bevorzugt besteht die Trägerschichtmatrix aus Polyamid, Polypropylen, Polyethylenterephthalat, Polyetheretherketon, Polyphthalamid oder thermoplastischem Polyurethan. Insbesondere ist und/oder bildet die Trägerschicht eine Platine und/oder einen Platinenzuschnitt und/oder ein Organoblech und/oder einen Organoblechzuschnitt. Beispielsweise wird die Trägerschicht durch Zuschneiden einer Platine und/oder eines Organoblechs gebildet. Vorzugsweise besteht jede Faserbandstückmatrix aus Polyamid, Polypropylen, Polyethylenterephthalat, Polyetheretherketon, Polyphthalamid oder thermoplastischem Polyurethan. Vorteilhaft besteht die Faserbandmatrix aus Polyamid, Polypropylen, Polyethylenterephthalat, Polyetheretherketon, Polyphthalamid oder thermoplastischem Polyurethan.

Bevorzugt erhärten und/oder erstarren die Trägerschichtmatrix und die Faserbandstückmatrizes nach dem Umformen, insbesondere durch Abkühlen. Vorzugsweise erhärtet und/oder erstarrt der durch die Umformung des Vorformlings gebildete Körper und/oder das durch die Umformung des Vorformlings gebildete Bauteil, insbesondere durch Abkühlen. Das Erhärten und/oder Erstarren wird beispielsweise dem Schritt e) zugerechnet oder bildet z.B. einen dem Schritt e) nachfolgenden Schritt.

Gemäß einer Weiterbildung erfolgt die Umformung des Vorformlings, insbesondere im Schritt e), mittels eines Umformformwerkzeugs. Bevorzugt umfasst das Umformwerkzeug eine Kavität. Vorzugsweise wird der Vorformling, insbesondere vor dem Schritt e) oder im Schritt e), vor dem Umformen und/oder zu dem Umformen in die Kavität eingebracht. Bevorzugt wird der Vorformling, insbesondere mittels des Umformwerkzeugs, in die Kavität eingeformt. Der Vorformling kann z.B. auch als Zwischenprodukt bezeichnet werden. Das Erhärten und/oder Erstarren erfolgt bevorzugt in dem Umformwerkzeug und/oder in dessen Kavität.

Durch das Erweichen und/oder Schmelzen der Faserbandstückmatrizes der auf die Trägerschicht aufgebrachten Faserbandstücke, gehen die Faserbandstücke mit der erhitzen Trägerschicht, deren Trägerschichtmatrix erweicht und/oder geschmolzen ist, vorzugsweise eine stoffschlüssige Verbindung ein. Bevorzugt gehen die Trägerschicht und die Faserbandstücke, insbesondere im Schritt d) und/oder im Schritt e) und/oder während des Erhärtens und/oder Erstarrens des Bauteils und/oder des umgeformten Vorformlings, eine stoffschlüssige Verbindung miteinander ein. Bevorzugt sind die Trägerschicht und die Faserbandstücke bei dem hergestellten Bauteil stoffschlüssig miteinander verbunden.

Vorteilhaft wird in der Kavität des Umformwerkzeugs und/oder in einer separaten Kavität an den durch die Umformung des Vorformlings gebildeten Körper und/oder an das durch die Umformung des Vorformlings gebildete Bauteil eine thermoplastische Spritzgussmasse, vorzugsweise zum Vorsehen wenigstens eines ergänzenden Elements, angespritzt. Somit lässt sich insbesondere wenigstens ein ergänzendes Element oder das wenigstens eine ergänzende Element an dem Körper und/oder dem Bauteil vorsehen. Die Spritzgussmasse ist z.B. frei von Verstärkungsfasern. Bevorzugt umfasst und/oder enthält die Spritzgussmasse aber Verstärkungsfasern. Erfolgt das Anspritzen in der Kavität des Umformwerkzeugs, so umfasst der Schritt des Erhärtens und/oder Erstarrens bevorzugt auch das Erhärten und/oder Erstarren der Spritzgussmasse.

Gemäß einer Weiterbildung werden die Faserbandstücke, insbesondere im Schritt a), an einer oder wenigstens einer vordefinierten Position und/oder an vordefinierten Positionen, bereitgestellt. Vorteilhaft werden die Faserbandstücke, insbesondere im Schritt b), nacheinander oder gleichzeitig aufgenommen. Bevorzugt werden die Faserbandstücke, insbesondere im Schritt b), nacheinander oder gleichzeitig zu dem Faserbandmuster angeordnet. Vorzugsweise wird das Faserbandmuster, insbesondere im Schritt d), an einer anderen Position auf die erhitzte Trägerschicht aufgebracht.

Gemäß einer Ausgestaltung werden die bereitgestellten Faserbandstücke, insbesondere im Schritt b) und/oder vorzugsweise an der oder den vordefinierten Positionen, mittels einer Handhabungseinrichtung aufgenommen und zu dem Faserbandmuster angeordnet. Bevorzugt werden die Faserbandstücke somit, insbesondere im Schritt a), der oder einer Handhabungseinrichtung bereitgestellt. Vorteilhaft werden die von der Handhabungseinrichtung aufgenommenen Faserbandstücke erwärmt. Die Handhabungseinrichtung weist dazu insbesondere eine Heizung auf. Bevorzugt werden die von der Handhabungseinrichtung aufgenommenen Faserbandstücke auf eine Temperatur erwärmt, die unterhalb der Schmelztemperatur jeder Faserbandstückmatrix und/oder unterhalb der Schmelztemperatur der Faserbandmatrix liegt. Vorzugsweise wird das Faserbandmuster, insbesondere in Schritt d) und/oder vorzugsweise an der anderen Position, mittels der oder einer anderen Handhabungseinrichtung auf die Trägerschicht aufgebracht.

Das erfindungsgemäße Verfahren wird bevorzugt mittels einer Fertigungsanlage durchgeführt. Die Fertigungsanlage umfasst insbesondere die Handhabungseinrichtung und/oder die Schneideinrichtung und/oder das Umformwerkzeug.

Mit dem erfindungsgemäßen Verfahren ist insbesondere ein Bauteil hoher geometrischer Komplexität herstellbar. Bevorzugt werden zwei thermoplastisch vorkonsolidierte Fasermaterialien (Trägerschicht, Faserbandstücke) zu einem Zwischenprodukt (Vorformling) vorgefertigt und anschließend umgeformt. Insbesondere ermöglicht die Erfindung die Steigerung der Werkstoffanisotropie durch lastpfadorientierte Faserteilstücke (Faserbandstücke).

Der eingangs erwähnte Zielkonflikt aus Wirtschaftlichkeit und mechanischen Eigenschaften des Endlosmaterials ist z.B. dadurch lösbar, dass die Auslegung des Platinenzuschnitts (Trägerschicht) nicht mehr nach der Spannungsspitze erfolgt, sondern auf einem darunter liegenden Spannungsniveau, wobei die Spannungsspitze insbesondere durch zusätzlich und lokal aufgebrachtes Fasermaterial (Faserbandstücke) aufnehmbar ist.

Vorteilhaft werden mehrere Faserbandstücke, vorzugsweise gleichzeitig oder nacheinander, insbesondere bei Umgebungstemperatur, in der Handhabungseinrichtung zu dem oder einem Faserbandmuster aufgenommen und/oder angeordnet. Insbesondere ist die Handhabungseinrichtung in der Lage, mehrere oder wenigstens zwei Faserbandstücke nacheinander aufzunehmen und zu dem Faserbandmuster anzuordnen und/oder abzulegen. Bevorzugt werden hierzu der Fertigungsanlage ebene Endlosfaserbänder zugeführt, die in Abhängigkeit der Lastanforderung zu unterschiedlichen Längen von der Schneideinrichtung zur Verfügung gestellt werden. Insbesondere nimmt die Handhabungseinrichtung die Faserbandstücke zu dem oder einem Faserbandmuster nacheinander auf und legt das gesamte Faserbandmuster zu einem Zeitpunkt ab.

Bevorzugt wird die Trägerschicht, insbesondere im Schritt c), auf eine derartige Temperatur erhitzt, dass die sich einstellende Temperatur oder Mischungstemperatur beim Auflegen des Faserbandmusters auf die Trägerschicht oberhalb der Schmelztemperatur der Matrix von Faserbandstücken und Trägerschicht verbleibt, vorzugsweise bis zum Umformen. Damit wird insbesondere sichergestellt, dass das daraus resultierende Zwischenprodukt, der Vorformling, umgeformt werden kann. Das Umformen des Vorformlings erfolgt vorzugsweise zeitnah nach dem Aufbringen des Faserbandmusters auf die erhitzte Trägerschicht, sodass der Vorformling bis zum Umformen umformbar bleibt und insbesondere nicht auf eine Temperatur abkühlt, bei welcher die Matrizes erhärten oder zumindest eine der Matrizes erhärtet.

Unter Binder oder Bindermaterialien bei der Verarbeitung thermoplastischer Endlosfaserbänder werden in der Regel niedrigschmelzende thermoplastische Zusatzschichten verstanden, die eine klebende Wirkung durch Temperatureinwirkung entfalten. Durch die Wahl der Temperatur oder Mischungstemperatur von Faserbandmuster und Trägerschicht oberhalb der Schmelztemperatur der Matrix beider Ausgangsstoffe kann insbesondere auf die Verwendung von Bindermaterialien zur Fixierung der Faserbandstücke auf der Trägerschicht verzichtet werden.

Bei der herkömmlichen Verarbeitung von Faserbändern durch das lokale Aufschmelzen und Anpressen mittels einer Rolle ergeben sich lokale Temperatur- und Spannungsspitzen, die als Fertigungsparameter im Bauteil eingefroren werden. Diese können den Verzug der daraus gefertigten Bauteile steigern. Daher ist es üblich, die Verarbeitungsspannung durch abermaliges und homogenes Aufheizen unter Formzwang derart gefertigter Verbundstrukturen zu reduzieren. Gemäß einer Ausgestaltung der Erfindung wird dieser zusätzliche Verarbeitungsschritt umgangen, indem alle zur Formung vorgesehenen Ausgangsprodukte zu einem gemeinsamen Zeitpunkt über die gesamte Fläche eine Temperatur oberhalb des Schmelzpunktes jeder Matrix vor der Formgebung erfahren. Die herkömmlich von der Anpressrolle dargestellte Flächenpressung wird bevorzugt mit dem Schließen der Kavität bei der Umformung, insbesondere durch das Umformwerkzeug, vollflächig aufgebracht.

Der Verfahrensschritt b) wird vorzugsweise nach dem Verfahrensschritt a) durchgeführt. Der Verfahrensschritt d) wird vorzugsweise nach dem Verfahrensschritt b) durchgeführt. Ferner wird der Verfahrensschritt d) vorzugsweise nach dem Verfahrensschritt c) durchgeführt. Dabei kann der Verfahrensschritt c) z.B. vor, während oder nach dem Verfahrensschritt a) und/oder vor, während oder nach dem Verfahrensschritt b) durchgeführt werden. Der Verfahrensschritt e) wird vorzugsweise nach dem Verfahrensschritt d) durchgeführt.

Bei der aufeinanderfolgenden Fertigung mehrerer Bauteile nach dem erfindungsgemäßen Verfahren kann der Materialfluss vorzugsweise dadurch gesteigert und/oder die Zykluszeit insbesondere dadurch verringert werden, indem die drei nachfolgend angegebenen Schritte parallel durchgeführt werden:
- Umformung des Vorformlings und anschließende Erstarrung durch Abkühlung der thermoplastischen Matrix, insbesondere für ein vorangehendes Bauteil der Bauteile,
- Temperieren der Trägerschicht, insbesondere für ein dem vorangehenden Bauteil nachfolgendes Bauteil der Bauteile,
- Trennen des Faserbandes zu Faserbandstücken, Aufnahme der Faserbandstücke und Ablage der Faserbandstücke zu dem Faserbandmuster, insbesondere für das nachfolgende Bauteil oder für ein dem nachfolgenden Bauteil nachfolgendes Bauteil.

Die Erfindung betrifft ferner ein nach dem erfindungsgemäßen Verfahren hergestelltes Bauteil aus Faserverbundwerkstoff.

Die Erfindung wird nachfolgend anhand einer bevorzugten Ausführungsform unter Bezugnahme auf die Zeichnung beschrieben. In der Zeichnung zeigen:
Fig. 1 eine Draufsicht auf ein Faserband und mehrere von dem Faserband abgetrennte Faserbandstücke,
Fig. 2 eine Draufsicht auf die Faserbandstücke,
Fig. 3 eine Draufsicht auf ein aus den Faserbandstücken gebildetes Faserbandmuster,
Fig. 4 eine Draufsicht auf eine Trägerschicht,
Fig. 5 eine Draufsicht auf einen aus der Trägerschicht und dem Faserbandmuster gebildeten Vorformling,
Fig. 6 eine schematische Schnittansicht eines Umformwerkzeugs zum Umformen des Vorformlings und
Fig. 7 eine Seitenansicht eines durch die Umformung des Vorformlings gebildeten Bauteils.

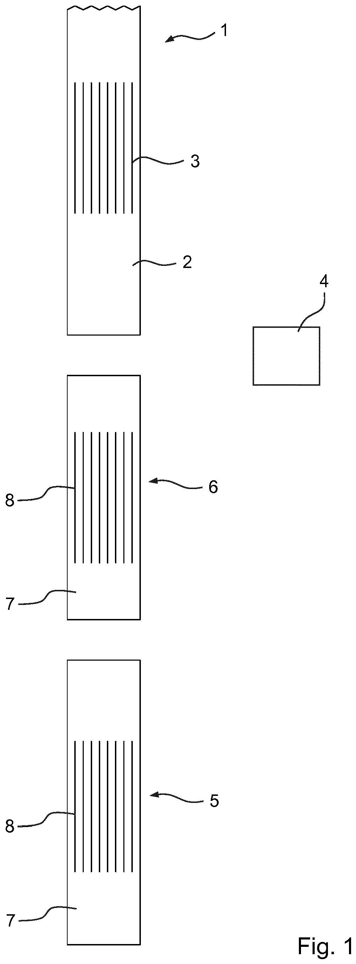

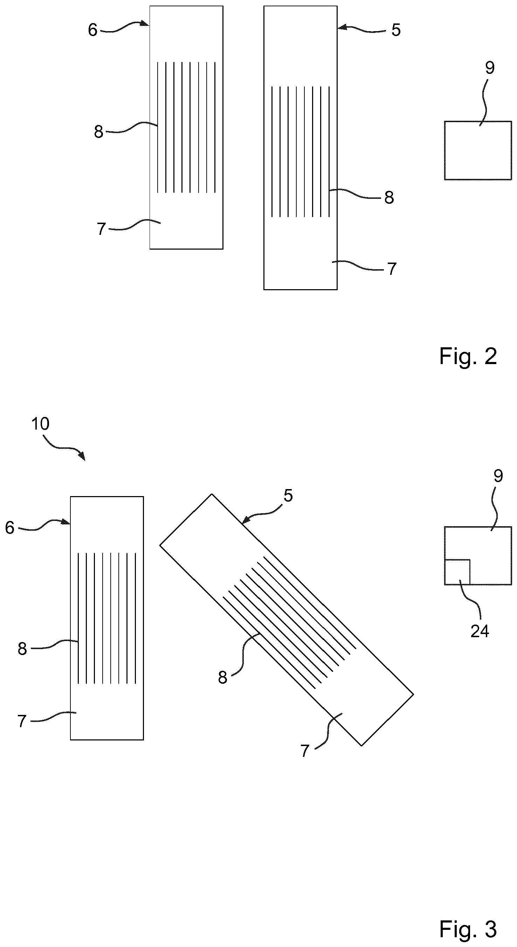

Aus Fig. 1 ist eine Draufsicht auf ein lediglich teilweise dargestelltes Faserband 1 ersichtlich, welches eine thermoplastische Faserbandmatrix 2 und darin eingebettete Faserbandfasern 3 in Form von Endlosfasern umfasst, die lediglich schematisch angedeutet sind. Von dem Faserband 1 werden mittels einer schematisch angedeuteten Schneideirichtung 4 mehrere ebene oder flächige Faserbandstücke 5 und 6 abgetrennt und an einer vordefinierten Position bereitgestellt, was aus Fig. 2 ersichtlich ist, die eine Draufsicht auf die bereitgestellten Faserbandstücke 5 und 6 zeigt. Die im festen Zustand vorliegenden Faserbandstücke 5 und 6 sind unterschiedlich lang und weisen jeweils eine von der Faserbandmatrix 2 abgetrennte Faserbandstückmatrix 7 mit darin eingebetteten Faserbandstückfasern 8 auf, die von den Faserbandfasern 3 abgetrennt und lediglich schematisch angedeutet sind. Die bereitgestellten Faserbandstücke 5 und 6 werden im festen Zustand mittels einer schematisch angedeuteten Handhabungseinrichtung 9 aufgenommen und zu einem ebenen oder flächigen Faserbandmuster 10 angeordnet, welches in Draufsicht aus Fig. 3 ersichtlich ist. In dem Faserbandmuster 10 weisen die Faserbandstücke 5 und 6 eine unterschiedliche Position und eine unterschiedliche Orientierung auf. Alternativ ist es z.B. auch möglich, dass die Faserbandstücke 5 und 6 in dem Faserbandmuster 10 gleich orientiert sind und/oder dass die Faserbandstücke bereichsweise oder zumindest bereichsweise überlappen. Bevorzugt werden die Faserbandstücke 5 und 6 mittels der Handhabungseinrichtung 9 auf eine Temperatur erwärmt, die unterhalb der Schmelztemperatur jeder Faserbandstückmatrix 7 liegt. Die Handhabungseinrichtung 9 weist dazu insbesondere eine schematisch angedeutete Heizung 24 auf.

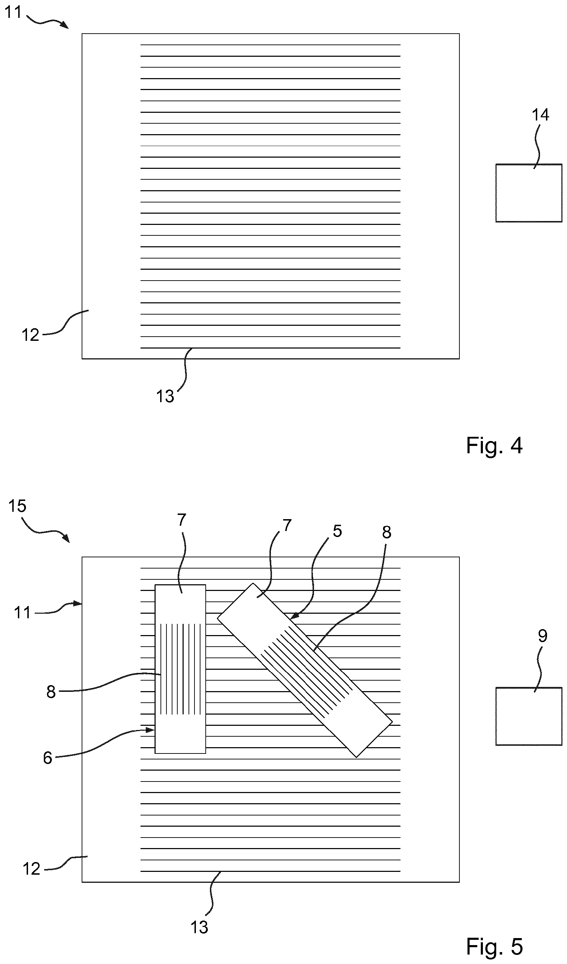

Ferner wird eine ebene oder flächige Trägerschicht 11 bereitgestellt, die aus Fig. 4 ersichtlich ist und eine thermoplastische Trägerschichtmatrix 12 mit darin eingebetteten Trägerschichtfasern 13 in Form von Endlosfasern umfasst, die lediglich schematisch angedeutet sind. Die Trägerschicht 11 ist insbesondere ein Organoblech oder Organoblechzuschnitt. Mittels einer schematisch angedeuteten Heizeinrichtung 14 wird die Trägerschicht 11 derart erhitzt, dass ihre Temperatur über der Schmelztemperatur der Faserbandstückmatrizes 7 und über der Schmelztemperatur der Trägerschichtmatrix 12 liegt, sodass die Trägerschichtmatrix 12 schmilzt. Anschließend wird das im festen Zustand vorliegende Faserbandmuster 10 als Ganzes von der Handhabungseinrichtung 9 auf die erhitzte Trägerschicht 11 aufgebracht, was aus Fig. 5 ersichtlich ist. Da das Faserbandmuster 10 und/oder die Faserbandstücke 5 und 6 des Faserbandmusters 10 im direkten Kontakt mit der erhitzten Trägerschicht 11 stehen, werden die Faserbandstückmatrizes 7 durch die erhitzte Trägerschicht 11 geschmolzen. Die Trägerschicht 11 mit dem aufgebrachten Faserbandmuster 10 bildet einen Vorformling 15, der sich in einem umformbaren Zustand befindet, da sowohl die Trägerschichtmatrix 12 als auch die Faserbandstückmatrizes 7 geschmolzen sind.

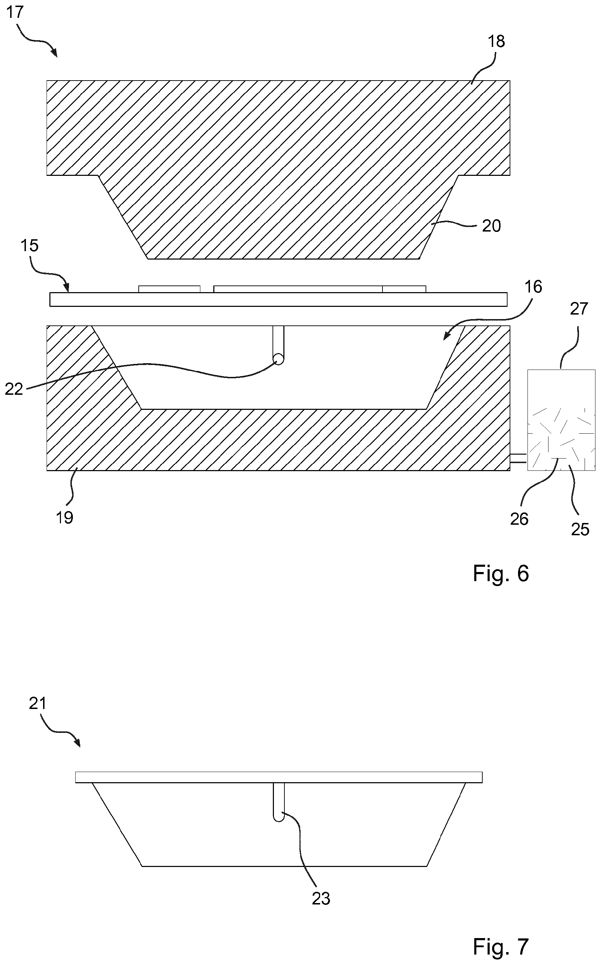

Solange sich der Vorformling 15 im umformbaren Zustand befindet, wird er mittels der Handhabungseinrichtung 9 oder mittels einer anderen Handhabungseinrichtung einem Umformwerkzeug 17 zugeführt, welches ein Oberwerkzeug 18 und ein Unterwerkzeug 19 umfasst, in dem eine Kavität 16 vorgesehen ist. Insbesondere wird der Vorformling 15 dabei in die Kavität 16 des Umformwerkzeugs 17 eingebracht, welches in schematischer Schnittdarstellung aus Fig. 6 ersichtlich ist. Dabei ist der in die Kavität 16 einzubringende Vorformling 15 schematisch dargestellt. Das Oberwerkzeug 18 weist einen Vorsprung 20 auf, der in die Kavität 16 eintauchen kann. Die Werkzeuge 18 und 19 werden nun zusammengefahren, sodass der Vorsprung 20 in die Kavität 16 eintaucht und der zwischen den Werkzeugen 18 und 19 angeordnete Vorformling 15, insbesondere in der Kavität 16, unter Druck zu einem Bauteil 21 umgeformt wird.

Ergänzend ist es möglich, in der Kavität 16 zusätzliche Elemente an das Bauteil 21 anzuspritzen, indem eine thermoplastische Spritzgussmasse 25 in die Kavität 16 eingespritzt wird. Dafür kann in dem Umformwerkzeug 17 wenigstens ein schematisch angedeuteter und von außen zugänglicher Durchgang 22 zur Kavität 16 vorgesehen sein, durch welchen hindurch die Spritzgussmasse 25 in die Kavität 16 eingebracht wird. Die Spritzgussmasse 25 ist mit Verstärkungsfasern 26 versetzt und von einem mit dem Umformwerkzeug 17 verbundenen Behälter 27 aufgenommen.

Anschließend kühlt das Bauteil 21 ab und verfestigt sich. Das feste Bauteil 21 wird dem Umformwerkzeug 17 entnommen und ist in Einzeldarstellung aus Fig. 7 ersichtlich. Ferner ist ein durch das Anspritzen der Spritzgussmasse 25 ausgebildetes Element 23 an dem Bauteil 21 angedeutet.

### Bezugszeichenliste

- 1: Faserband
- 2: Faserbandmatrix
- 3: Faserbandfasern
- 4: Schneideinrichtung
- 5: Faserbandstück
- 6: Faserbandstück
- 7: Faserbandstückmatrix
- 8: Faserbandstückfasern
- 9: Handhabungseinrichtung
- 10: Faserbandmuster
- 11: Trägerschicht
- 12: Trägerschichtmatrix
- 13: Trägerschichtfasern
- 14: Heizeinrichtung
- 15: Vorformling
- 16: Kavität des Umformwerkzeugs
- 17: Umformwerkzeug
- 18: Oberwerkzeug des Umformwerkzeugs
- 19: Unterwerkzeug des Umformwerkzeugs
- 20: Vorsprung des Oberwerkzeugs
- 21: Bauteil
- 22: Durchgang
- 23: zusätzliches Element am Bauteil
- 24: Heizung der Handhabungseinrichtung
- 25: Spritzgussmasse
- 26: Verstärkungsfasern in Spritzgussmasse
- 27: Behälter für Spritzgussmasse

## Patentansprüche

1. Verfahren zum Herstellen eines Bauteils aus einem Faserverbundwerkstoff, wobei
a) mehrere Faserbandstücke (5, 6), die jeweils eine thermoplastische Faserbandstückmatrix (7) mit darin eingebetteten Faserbandstückfasern (8) umfassen, bereitgestellt werden,
b) die Faserbandstücke (5, 6) im festen Zustand aufgenommen und zu einem Faserbandmuster (10) angeordnet werden,
c) eine Trägerschicht (11), die eine thermoplastische Trägerschichtmatrix (12) mit darin eingebetteten Trägerschichtfasern (13) umfasst, bereitgestellt und derart erhitzt wird, dass die Trägerschichtmatrix (12) erweicht oder schmilzt,
d) aus der Trägerschicht (11) und dem Faserbandmuster (10) ein Vorformling (15) gebildet wird, indem das Faserbandmuster (10) im festen Zustand auf die erhitzte Trägerschicht (11) aufgebracht und durch diese derart erwärmt wird, dass die Faserbandstückmatrizes (7) erweichen oder schmelzen, sodass der Vorformling (15) in einem umformbaren Zustand vorliegt, in dem sowohl die Trägerschichtmatrix (12) als auch Faserbandstückmatrizes (7) erweicht oder geschmolzen sind, und
e) der im umformbaren Zustand vorliegende Vorformling (15) umgeformt wird.

2. Verfahren nach Anspruch 1, **dadurch gekennzeichnet, dass** die Trägerschicht (11) vor dem Umformen eben oder überwiegend eben ist.

3. Verfahren nach Anspruch 1 oder 2, **dadurch gekennzeichnet, dass** das Faserbandmuster (10) vor dem Umformen eben oder überwiegend eben ist.

4. Verfahren nach einem der vorangehenden Ansprüche, **dadurch gekennzeichnet, dass** die Faserbandstücke (5, 6) des Faserbandmusters (10) eine unterschiedliche Position und/oder eine unterschiedliche Orientierung aufweisen.

5. Verfahren nach einem der vorangehenden Ansprüche, **dadurch gekennzeichnet, dass** die Faserbandstücke (5, 6) unterschiedliche Längen aufweisen.

6. Verfahren nach einem der vorangehenden Ansprüche, **dadurch gekennzeichnet, dass** die Trägerschichtfasern (13) und/oder die Faserbandstückfasern (8) Endlosfasern sind oder umfassen.

7. Verfahren nach einem der vorangehenden Ansprüche, **dadurch gekennzeichnet, dass** die Trägerschichtfasern (13) und/oder die Faserbandstückfasern (8) Kohlenstoffasern und/oder Glasfasern und/oder Aramidfasern und/oder Naturfasern sind oder umfassen.

8. Verfahren nach einem der vorangehenden Ansprüche, **dadurch gekennzeichnet, dass** die Faserbandstücke (5, 6) vor oder zu ihrem Bereitstellen von wenigstens einem Faserband (1) abgetrennt werden, welches eine thermoplastische Faserbandmatrix (2) mit darin eingebetteten Faserbandfasern (3) in Form von Endlosfasern umfasst.

9. Verfahren nach einem der vorangehenden Ansprüche, **dadurch gekennzeichnet, dass** die Trägerschichtmatrix (12) und jede Faserbandstückmatrix (7) der gleichen thermoplastischen Stoffgruppe angehören und/oder dass die Schmelztemperatur der Trägerschichtmatrix (12) zu der Schmelztemperatur jeder Faserbandstückmatrix (7) eine Abweichung von weniger als 30 Kelvin aufweist.

10. Verfahren nach einem der vorangehenden Ansprüche, **dadurch gekennzeichnet, dass** die Trägerschichtmatrix (12) und/oder jede Faserbandstückmatrix (7) aus Polyamid, Polypropylen, Polyethylenterephthalat, Polyetheretherketon, Polyphthalamid oder thermoplastischem Polyurethan besteht.

11. Verfahren nach einem der vorangehenden Ansprüche, **dadurch gekennzeichnet, dass** die Umformung des Vorformlings (15) mittels eines Umformformwerkzeugs (17) mit einer Kavität (16) erfolgt, in welche der Vorformling (15) zum Umformen eingebracht wird.

12. Verfahren nach Anspruch 11, **dadurch gekennzeichnet, dass** in der Kavität (16) des Umformwerkzeugs (17) oder in einer separaten Kavität an den durch die Umformung des Vorformlings (15) gebildeten Körper (21) eine thermoplastische Spritzgussmasse (25) angespritzt wird.

13. Verfahren nach einem der vorangehenden Ansprüche, **dadurch gekennzeichnet, dass** die bereitgestellten Faserbandstücke (5, 6) von einer Handhabungseinrichtung (9) aufgenommen und zu dem Faserbandmuster (10) angeordnet werden.

14. Verfahren nach Anspruch 13, **dadurch gekennzeichnet, dass** die von der Handhabungseinrichtung (9) aufgenommenen Faserbandstücke (5, 6) auf eine Temperatur erwärmt werden, die unterhalb der Schmelztemperatur jeder Faserbandstückmatrix (7) liegt.

## Claims

1. Method for producing a component from a fibre-composite material, wherein a) a plurality of fibre-tape pieces (5, 6), which each comprise a thermoplastic fibre-tape piece matrix (7) with fibre-tape-piece fibres (8) embedded therein, are provided, b) the fibre-tape pieces (5, 6) are picked up in the solid state and arranged so as to form a fibre-tape pattern (10), c) a backing layer (11), which comprises a thermoplastic backing-layer matrix (12) with backing-layer fibres (13) embedded therein, is provided and heated such that the backing-layer matrix (12) softens or melts, d) a preform (15) is formed from the backing layer (11) and the fibre-tape pattern (10) in that the fibre-tape pattern (10) is applied in the solid state to the heated backing layer (11) and is heated thereby so that the fibre-tape-piece matrices (7) soften or melt such that the preform (15) is in a deformable state in which both the backing-layer matrix (12) and the fibre-tape-piece matrices (7) have been softened or melted, and e) the preform (15) in the deformable state is deformed.

2. Method according to claim 1, **characterised in that** prior to deformation the backing layer (11) is flat or predominantly flat.

3. Method according to claim 1 or claim 2 , **characterised in that** prior to deformation the fibre-tape pattern (10) is flat or predominantly flat.

4. Method according to any one of the preceding claims, **characterised in that** the fibre-tape pieces (5, 6) of the fibre-tape pattern (10) have a different position and/or a different orientation.

5. Method according to any one of the preceding claims, **characterised in that** the fibre-tape pieces (5, 6) have different lengths.

6. Method according to any one of the preceding claims, **characterised in that** the backing-layer fibres (13) and/or the tape-fibre-piece fibres (8) are or comprise endless fibres.

7. Method according to any one of the preceding claims, **characterised in that** the backing-layer fibres (13) and/or the tape-fibre-piece fibres (8) are or comprise carbon fibres and/or glass fibres and/or aramid fibres and/or natural fibres.

8. Method according to any one of the preceding claims, **characterised in that** prior to or at the time of their provision the fibre-tape pieces (5, 6) are separated from at least one fibre tape (1), which comprises a thermoplastic fibre tape matrix (2) with fibre-tape fibres (3) embedded therein in the form of endless fibres.

9. Method according to any one of the preceding claims, **characterised in that** the backing-layer matrix (12) and each fibre-tape piece matrix (7) belong to the same thermoplastic substance group and/or that the melting temperature of the backing-layer matrix (12) deviates from the melting temperature of each fibre-tape piece matrix (7) by less than 30 Kelvin.

10. Method according to any one of the preceding claims, **characterised in that** the backing-layer matrix (12) and/or each fibre-tape piece matrix (7) consists of polyamide, polypropylene, polyethylene terephthalate, polyetheretherketone, polyphthalamide or thermoplastic polyurethane.

11. Method according to any one of the preceding claims, **characterised in that** the deformation of the preform (15) takes place by means of a deforming mould tool (17) with a cavity (16), in which the preform (15) is introduced for deformation.

12. Method according to claim 11, **characterised in that** in the cavity (16) of the deforming mould tool (17) or in a separate cavity a thermoplastic injection moulding mass (25) is injection moulded onto the body (21) formed by the deformation of the preform (15)

13. Method according to any one of the preceding claims, **characterised in that** the fibre-tape pieces (5, 6) provided are picked up by a handling device (9) and arranged in the fibre-tape pattern.

14. Method according to claim 13, **characterised in that** the fibre-tape pieces (5, 6) picked up by the handling device (9) are heated to a temperature that is below the melting temperature of each fibre-tape piece matrix (7).

## Revendications

1. Procédé de fabrication d'un composant à partir d'un matériau composite à fibres, dans lequel
a) plusieurs pièces de bandes à fibres (5, 6), qui comprennent chacune une matrice de pièces de bandes à fibres (7) avec des fibres de pièces de bandes à fibres (8) incorporées à l'intérieur, sont mises à disposition,
b) les pièces de bandes à fibres (5, 6) sont logées dans l'état solide et sont disposées en un motif de bandes à fibres (10),
c) une couche porteuse (11), qui comprend une matrice de couche porteuse (12) avec des fibres de couche porteuse (13) incorporées à l'intérieur, est mise à disposition et chauffée de façon à ce que la matrice de couche porteuse (12) soit ramollie ou fonde,
d) à partir de la couche porteuse (11) et du motif de bandes à fibres (10), est réalisée une préforme (15), grâce au fait que le motif de bandes à fibres (10) dans l'état solide est appliqué sur la couche porteuse (11) chauffée et est chauffé par celle-ci, de façon à ce que les matrices de pièces de bandes à fibres (7) se ramollissent ou fondent, afin que la préforme (15) existe dans un état façonnable dans lequel aussi bien la matrice de couche porteuse (12) que les matrices de bandes à fibres (7) sont ramollies ou fondues et
e) la préforme (15) existant dans l'état façonnable est façonnée.

2. Procédé selon la revendication 1, **caractérisé en ce que** la couche porteuse (11) est plane ou globalement plane avant le façonnage.

3. Procédé selon la revendication 1 ou 2, **caractérisé en ce que** le motif de bandes à fibres (10) est plan ou globalement plan avant le façonnage.

4. Procédé selon l'une des revendications précédentes, **caractérisé en ce que** les pièces de bandes à fibres (5, 6) du motif de bandes à fibres (10) présentent des positions différentes et/ou des orientations différentes.

5. Procédé selon l'une des revendications précédentes, **caractérisé en ce que** les pièces de bandes à fibres (5, 6) présentent des longueurs différentes.

6. Procédé selon l'une des revendications précédentes, **caractérisé en ce que** les fibres de la couche porteuse (13) et/ou les fibres de pièces de bandes à fibres (8) sont ou comprennent des fibres continues.

7. Procédé selon l'une des revendications précédentes, **caractérisé en ce que** les fibres de la couche porteuse (13) et/ou les fibres de pièces de bandes à fibres (8) sont ou comprennent des fibres de carbone et/ou des fibres de verre et/ou des fibres d'aramide et/ou des fibres naturelles.

8. Procédé selon l'une des revendications précédentes, **caractérisé en ce que** les pièces de bandes à fibres (5, 6) sont séparées, avant ou lors de leur mise à disposition, d'au moins une bande à fibres (1), qui comprend une matrice de bande à fibres (2) avec des fibres de bande à fibres (3) incorporées à l'intérieur sous la forme de fibres continues.

9. Procédé selon l'une des revendications précédentes, **caractérisé en ce que** la matrice de la couche porteuse (12) et chaque matrice de pièces de bandes à fibres (7) appartiennent au même groupe de matériaux thermoplastiques et/ou **en ce que** la température de fusion de la matrice de la couche porteuse (12) présente, par rapport à la température de fusion de chaque matrice de pièces de bandes à fibres (7), un écart inférieur à 30 Kelvin.

10. Procédé selon l'une des revendications précédentes, **caractérisé en ce que** la matrice de la couche porteuse (12) et/ou chaque matrice de pièces de bandes à fibres (7) est constituée de polyamide, de polypropylène, de polyéthylène téréphtalate, de polyétheréther cétone, de polyphtalamide ou de polyuréthane thermoplastique.

11. Procédé selon l'une des revendications précédentes, **caractérisé en ce que** le façonnage de la préforme (15) a lieu au moyen d'un outil de façonnage (17) avec une cavité (16), dans laquelle la préforme (15) est insérée pour le façonnage.

12. Procédé selon la revendication 11, **caractérisé en ce que**, dans la cavité (16) de l'outil de façonnage (17) ou dans une cavité séparée, une masse de moulage par injection thermoplastique (25) est pulvérisée sur le corps (21) formé par le façonnage de la préforme (15).

13. Procédé selon l'une des revendications précédentes, **caractérisé en ce que** les pièces de bandes à fibres (5, 6) sont prises en charge par un dispositif de manipulation (9) et sont disposés dans le motif de bandes à fibres (10).

14. Procédé selon la revendication 13, **caractérisé en ce que** les pièces de bandes à fibres (5, 6) prises en charge par le dispositif de manipulation (9) sont chauffées à une température qui se trouve en dessous de la température de fusion de chaque matrice de pièces de bandes à fibres (7).
